Europäisches Patentamt

European Patent Office

Office européen des brevets

(19)

(11) Numéro de publication: **0 020 983**
**B1**

(12) **FASCICULE DE BREVET EUROPEEN**

(45) Date de publication du fascicule du brevet:
18.04.84

(51) Int. Cl.³: **G 06 F 13/00**, G 11 C 9/06

(21) Numéro de dépôt: 80102579.2

(22) Date de dépôt: 09.05.80

(54) Système de mémoire comportant un dispositif d'emmagasinage sérié.

(30) Priorité: **11.06.79 US 47005**

(43) Date de publication de la demande:
07.01.81 Bulletin 81/1

(45) Mention de la délivrance du brevet:
18.04.84 Bulletin 84/16

(84) Etats contractants désignés:
**BE CH DE FR GB LI NL SE**

(56) Documents cités:
**EP - A - 0 017 585**
**DE - A - 2 509 835**
**DE - A - 2 526 244**
**FR - A - 2 119 928**

**COMPCON, sixth annual IEEE Computer Society International Conference, San Francisco, 12-14 septembre 1972, publié par IEEE, pages 119-121 New York US JENSEN: "Mixed Mode and Multidimensional Memories"**
**COMPUTER DESIGN, vol. 15, no. 10 octobre 1976, pages 81-91 Concord US JULIUSSEN: "Magnetic Bubble Systems Approach Practical Use"**
*Computer Society Conference, Spring 1976, pp. 113-117,* **"A data secure computer architecture", Baum et al.**
**Encyclopedia of Computer Science", A. Ralston et al., van Nostrand, 1976, pp. 389-394**

(73) Titulaire: **International Business Machines Corporation, Old Orchard Road, Armonk, N.Y. 10504 (US)**

(72) Inventeur: **Sams, Jack Griggs, 505 Whispering River Road, Boynton Beach, Florida 33435 (US)**

(74) Mandataire: **Bonneau, Gérard, Compagnie IBM France Département de Propriété Industrielle, F-06610 La Gaude (FR)**

Système de mémoire comportant un dispositif d'emmagasinage série

Domaine technique auquel l'invention
se rapporte

La présente invention concerne les systèmes de calculateurs et les dispositifs d'emmagasinage de données, et, plus particulièrement, un dispositif d'emmagasinage à plusieurs dimensions qui fait appel à l'emploi de dispositifs d'emmagasinage série.

Etat de la technique antérieure

L'un des problèmes qui se posent lors de l'étude d'un calculateur réside dans la nécessité de réduire au minimum le coût de la mémoire du calculateur sans pour autant augmenter l'intervalle de temps nécessaire pour accéder aux données désirées. Les mémoires dont les données peuvent être directement traitées par les programmes du calculateur sont généralement appelées mémoires principales et doivent être capables de fournir des données sous la forme d'éléments ou de mots de longueur variable. Les mémoires dites secondaires sont des dispositifs tels que des tambours, des disques ou des bandes magnétiques qui contiennent de grandes quantités de données transmises à la mémoire principale sous la forme de blocs et sous le contrôle d'instructions de lecture et d'écriture. Par ailleurs, l'adresse d'une donnée peut être traitée comme une donnée et le format le plus grand d'une donnée devient alors le format le plus grand d'une adresse. On a donc cherché à réaliser l'emmagasinage de données et d'adresses de plus en plus longues, ce qui s'est traduit par une augmentation du coût des dispositifs d'adressage. On a également cherché à réduire la longueur des adresses, mais cela a entraîné une limitation de l'usage du calculateur. Les mémoires de l'art antérieur se limitent sur le plan technologique à des listes linéaires à accès séquentiel ou sélectif, dont il est en principe nécessaire que le contenu soit réorganisé de façon permanente par des instructions programmées. D'autre part, les piles et les files d'attente sont des exemples de structures de données ne faisant pas l'objet d'un accès sélectif qui sont communément employées.

On a également proposé d'employer des mémoires composées d'ensembles à plusieurs dimensions, c'est-à-dire à plusieurs coordonnées. Les mémoires de ce type comportent des ensembles qui sont rendus linéaires à l'aide de techniques de conversion d'adresses. Dans une mémoire linéaire à accès sélectif, un ensemble à n dimensions peut être rendu linéaire, mais ceci demande des opérations longues et délicates sur les adresses de données.

On a aussi pensé à utiliser des mémoires à plusieurs dimensions, comme il est décrit dans l'article de Jensen «Mixed Mode and Multidimensional Memories» paru dans la revue IEEE, pages 119–121 de septembre 1972, dans lesquelles l'adressage est sélectif selon une ou plusieurs dimensions et les positions de mémoire étant agencées en série genre file d'attente dans la dernière dimension.

Exposé de l'invention

La présente invention concerne donc un système de mémoire de données, comportant un premier processeur pouvant générer des instructions d'introduction et de retrait de données, un premier dispositif d'emmagasinage de données à accès sélectif associé audit premier processeur et comportant une pluralité de positions de mémoire, un second processeur connecté au premier processeur et une pluralité de dispositifs secondaires d'emmagasinage de données associées au second processeur. Chaque dispositif secondaire d'emmagasinage est une mémoire série du type «premier-entré, premier-sorti» ou «dernier-entré, premier-sorti», et est associé respectivement à une position de mémoire du premier dispositif d'emmagasinage. La largeur de données de chacune des positions de mémoire du dispositif secondaire correspond à la largeur de données de la position de mémoire dudit premier dispositif auquel il est respectivement associé. Des moyens de commande sont associés au premier processeur et au premier dispositif d'emmagasinage de données qui, en réponse aux instructions générées par ledit premier processeur, adressent une des positions de mémoire du premier dispositif d'emmagasinage de façon à transférer, par l'intermédiaire du premier processeur, des données entre la position de mémoire et le second processeur et permettre à ce dernier d'adresser le dispositif secondaire d'emmagasinage associé, de telle sorte que le premier processeur a accès à chacun des dispositifs secondaires d'emmagasinage par l'exécution par les moyens de commande d'une instruction commandant l'adressage à une position de mémoire du premier dispositif d'emmagasinage. Le second processeur procède, en réponse du décodage des instructions générées par le premier processeur, au transfert des données entre la position de mémoire du premier moyen d'emmagasinage adressé par les moyens de commande, et le dispositif secondaire d'emmagasinage associé.

Le système de l'invention peut également comporter deux mémoires tampon respectivement associées au premier processeur et aux dispositifs d'emmagasinage série, et dans lesquelles les données peuvent être temporairement emmagasinées avant leur transfert entre les dispositifs d'emmagasinage, de manière à augmenter la vitesse à laquelle les données sont transférées.

Avantages apportés par l'invention

L'invention permet de réaliser un système de mémoire à plusieurs dimensions, à l'intérieur du calculateur, permettant l'emmagasinage et le transfert de blocs de données et n'exigeant aucune manipulation supplémentaire d'adresses de la part du programmeur. Un tel système de mémoire permet d'augmenter la place disponible dans un processeur aux fins de l'emmagasinage de données sans pour autant rendre plus compliqué l'adressage des données contenues dans la mémoire principale. En particulier il ne demande pas un format d'adresse plus grand bien que la capacité de la mémoire soit accrue. L'invention permet afin de disposer de dispositifs d'emmagasinage série susceptibles d'être employés avec des techniques d'accès direct à la mémoire.

L'invention est exposée ci-après plus en détail à l'aide de dessins représentant seulement un mode d'exécution.

Brève description des figures

La fig. 1 représente schématiquement les principaux composants d'un système de traitement de données incorporant le dispositif d'emmagasinage de la présente invention.

La fig. 2 est un schéma synoptique représentant de façon plus détaillée un système de traitement de données incorporant le dispositif de la présente invention.

La fig. 3 est un schéma synoptique d'un système de traitement de données utilisant la technique de mise des données en mémoire-tampon de la présente invention.

La fig. 4 représente schématiquement la façon dont la présente invention peut être employée aux fins du multiplexage des données provenant d'un dispositif d'entrée/sortie.

Description d'un mode de réalisation de l'invention

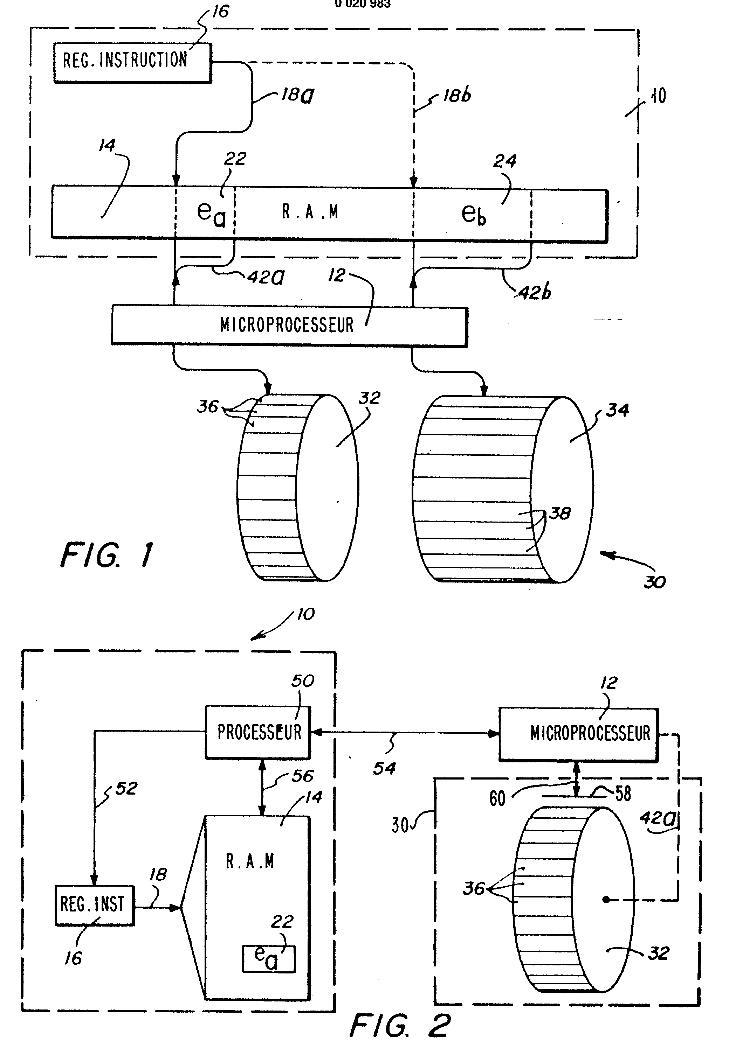

Le système de traitement de données 10 dont les principaux composants sont représentés sur la fig. 1 comporte une mémoire principale 14 et un processeur 12 qui peut être du type décrit dans le brevet des E.U.A. No. 4 038 642 et représenté sur la fig. 17 de ce dernier. La mémoire principale 14, associée au processeur 12, permet d'emmagasiner des instructions de programme et des données. Un programme est exécuté en lisant ces instructions dans la mémoire principale 14 de façon séquentielle. Un registre d'adresses de mémoire 16 est associé à la mémoire 14. Il permet en particulier d'emmagasiner l'adresse de l'instruction suivante afin d'adresser l'instruction suivante contenue dans la mémoire 14 par l'intermédiaire de lignes de signaux 18a et 18b.

La mémoire principale 14 comprend un certain nombre de positions dans lesquelles des données ou des instructions peuvent être emmagasinées. A titre d'exemple, on a représenté sur la fig. 1 des positions d'emmagasinage de données $e_a$ désignées 22 et des positions de données $e_b$ désignées 24. Les positions 22 et 24 ont des largeurs différentes, c'est-à-dire qu'elles contiennent un nombre différent de positions binaires, de manière à permettre l'emmagasinage de mots de données ou d'instructions de longueurs différentes.

Le dispositif d'emmagasinage série de la présente invention est désigné par la référence 30 et comprend plusieurs dispositifs auxiliaires d'emmagasinage série tels que les dispositifs 32 et 34. Le dispositif 32 comprend plusieurs positions de mémoire 36 dont la largeur correspond à celle de la position de mémoire 22 de la mémoire principale 14. De même, le dispositif 34 comprend plusieurs positions de mémoire 38 dont la largeur correspond à celle de la position 24 de la mémoire principale 14. Les dispositifs 32 et 34 sont appelés dispositifs d'emmagasinage série en ce sens que leurs positions de mémoire sont accédés de façon séquentielle. Bien que l'on n'ait représenté sur la figure que deux dispositifs, 32 et 34, il est sous-entendu qu'un nombre quelconque de ces dispositifs pourrait être employé.

L'accès au dispositif 30 est obtenu en adressant une position choisie de la mémoire principale 14 au moyen du registre d'adresse 16, qui localise le premier mot ou le seul mot contenu dans cette position. Cette dernière fait donc fonction de «fenêtre» permettant d'accéder au dispositif 30. Par exemple, la position 22 de la mémoire principale 14 fait fonction de fenêtre d'accès au dispositif d'emmagasinage série 32 et aux positions de mémoire 36. Les communications entre la mémoire principale 14, le processeur 12 et le dispositif 30 s'effectuent par l'intermédiaire d'un mécanisme d'accès 42, représenté sur la fig. 1 sous la forme des lignes de signaux 42a et 42b. Il est donc possible d'ajouter des positions de mémoire supplémentaires en dehors de la mémoire principale 14, dans le dispositif 30, pour augmenter davantage encore la capacité d'emmagasinage du processeur de données 10, sans pour autant avoir à augmenter le nombre de positions adressables que comporte la mémoire principale 14. Ainsi, une troisième dimension est en fait ajoutée à la mémoire principale 14, ce qui constitue un aspect important de la présente invention.

Dans le présent contexte, une «position de mémoire» se compose, par exemple, d'au moins huit bits. Les éléments de données plus longs occupent un nombre déterminé de positions de mémoire contiguës. Lorsqu'un tel élément emmagasiné dans une position de mémoire est transféré, les différents bits qui le composent sont transférés simultanément et en parallèle.

Les dispositifs 32 et 34 peuvent comporter un grand nombre de dispositifs d'emmagasinage série dans lesquels les données sont emmagasinées en série. Ces dispositifs peuvent comprendre, par exemple, un dispositif à couplage de charge du type commercialisé par la firme Texas Instruments Incorporated sous la désignation Modèle TMS 3064 JL, qui est une mémoire à 65 536 bits dont la description figure dans la publication «MOS Memory Data Book» éditée par ladite firme en 1978. Un tel dispositif est également décrit dans le brevet des E.U.A. No. 3 947 698. Les dispositifs 32 et 34 peuvent comprendre, à défaut du dispositif qui vient d'être mentionné, des dispositifs d'emmagasinage à domaines magnétiques du type commercialisé par la firme Texas Instruments sous la désignation Modèle TIBO203. Ce dernier type de dispositif est décrit dans le brevet des E.U.A. No. 4 090 251. Par ailleurs, des dispositifs d'emmagasinage adressables par faisceau électronique ou par faisceau optique peuvent également être employés.

La fig. 2 représente schématiquement une réalisation du dispositif 30 de l'invention. Le processeur de données 10 peut constituer, par exemple, un processeur principal et comprendre une unité centrale de traitement 50 connectée au registre 16 par l'intermédiaire d'une ligne de signaux 52. L'unité centrale 50 assure le traitement des données et commande les fonctions à exécuter en réponse aux instructions de programme emmagasinées dans la mémoire principale 14. L'unité 50 est connectée par l'intermédiaire d'un bus de données 54 au processeur 12 disposé dans le dispositif 30. Ce processeur commande le dispositif d'emmagasinage série 32. Plus particulièrement, et puisque les différents dispositifs d'emmagasinage série comportent des arrangements de circuits d'accès différents, ce sera le rôle du processeur 12 de maintenir l'uniformité logique de la mémoire en dépit des différences d'accès physiques.

L'aspect logique de l'accès des données est suggéré par l'anneau ou tambour 32. Des éléments de données emmagasinés en séquence lors de leur création peuvent être balayés dans la même direction pour obtenir une séquence de type «premier-entré, premier-sorti» (FIFO) ou dans la direction opposée pour obtenir une séquence du type «dernier-entré, premier-sorti» (LIFO). C'est le processeur 12 qui emmagasine les données, assigne et maintient les nombres de la séquence. Chaque élément de données est présenté au processeur 10 dans la séquence impliquée par l'instruction en cours d'exécution.

Les quatre types d'instructions suivants illustrent diverses opérations possibles sur ces séquences de données:

*Introduction* – Cette instruction provoque l'introduction d'un nouvel élément de données à la fin ou queue d'une séquence d'éléments de données.

. *Retrait* – Cette instruction provoque le retrait ou destruction de l'élément situé à la tête (FIFO) ou à la queue de la séquence (LIFO).

*Balayage* – Cette instruction provoque la présentation d'éléments de la séquence, sans destruction. Une opération FIFO ou LIFO peut être spécifiée.

*Mise à jour* – Cette instruction provoque le remplacement d'un élément d'une séquence par la valeur courante se trouvant dans la position de mémoire référencée 22 ou 24.

Il est à noter que les opérations «Balayage» et «Mise à jour» sont de préférence des opérations impliquant un adressage par le contenu.

Dans le cas d'une pile du . type «premier-entré-, premier-sorti», chaque nouvel élément est ajouté au bas de la pile et les anciens éléments contenus dans celle-ci sont décalés vers le haut d'une position chaque fois qu'un élément de données est retiré de la partie supérieure de la pile. Le dispositif 32 permet de disposer les éléments de données successifs suivant une boucle et d'accéder à ces éléments de façon séquentielle lorsqu'ils passent devant un dispositif fixe de lecture/écriture 58 (fig. 2). Le processeur 12 est connecté par l'intermédiaire d'un bus 60 au dispositif 58 de manière à pouvoir recevoir des données du dispositif 32 ou transférer des données à ce dernier. Le dispositif 32 est schématiquement représenté sur les figures sous la forme d'une roue qui symbolise l'ordre des différentes positions de mémoire. Le dispositif de la présente invention se prête particulièrement bien à la réalisation des deux types de pile (FIFO ou LIFO) mentionnés plus haut.

Le processeur 10 peut exécuter d'autres instructions telles que «chargement», «emmagasinage», «déplacement», «lecture», «écriture» qui n'affectent que la mémoire principale 14. La mémoire 30 ne subit aucune modification jusqu'à ce qu'une instruction, telle que «Introduction» est exécutée, une telle instruction impliquant une modification dans la troisième dimension de mémoire.

La position choisie de la mémoire principale 14 (fig. 2), par exemple la position 22, sert de fenêtre d'accès par rapport au dispositif 32. La position choisie 22 représente en fait l'élément de données «supérieur» emmagasiné dans la position 36 du dispositif 32 du point de vue du programme en cours d'exécution dans le processeur 10. Lorsque ce dernier, dans la suite de ses instructions de programme, rencontre une instruction d'introduction, laquelle instruction comprend l'adresse de la position sélectionnée de la mémoire principale 14, il écrit l'élément de données désiré dans cette position de mémoire et informe le processeur 12 qu'il y a lieu d'ajouter un élément de données au dispositif 32. Le processeur 12 enregistre cet élément de données dans une position de mémoire 36 vide du dispositif 32 et fait passer ce dernier à la position 36 vide suivante. Si le processeur 10 rencontre une instruction de retrait, contenant l'adresse d'une position donnée de la mémoire principale 14, il informe le processeur 12 que l'on a besoin de l'un des éléments de la pile contenue dans le dispositif 32. Le processeur 12 transfère alors l'élément approprié de la position 36 dans laquelle il se trouve à l'unité de traitement 50 par l'intermédiaire du bus de données 54, ce qui a pour effet de provoquer l'emmagasinage dudit élément dans la position choisie de la mémoire principale 14 par l'intermédiaire du bus de données 56. Le processeur 12 indique alors que la position 36 sélectionnée est vide et fait avancer d'une position le dispositif 32 dans la direction appropriée.

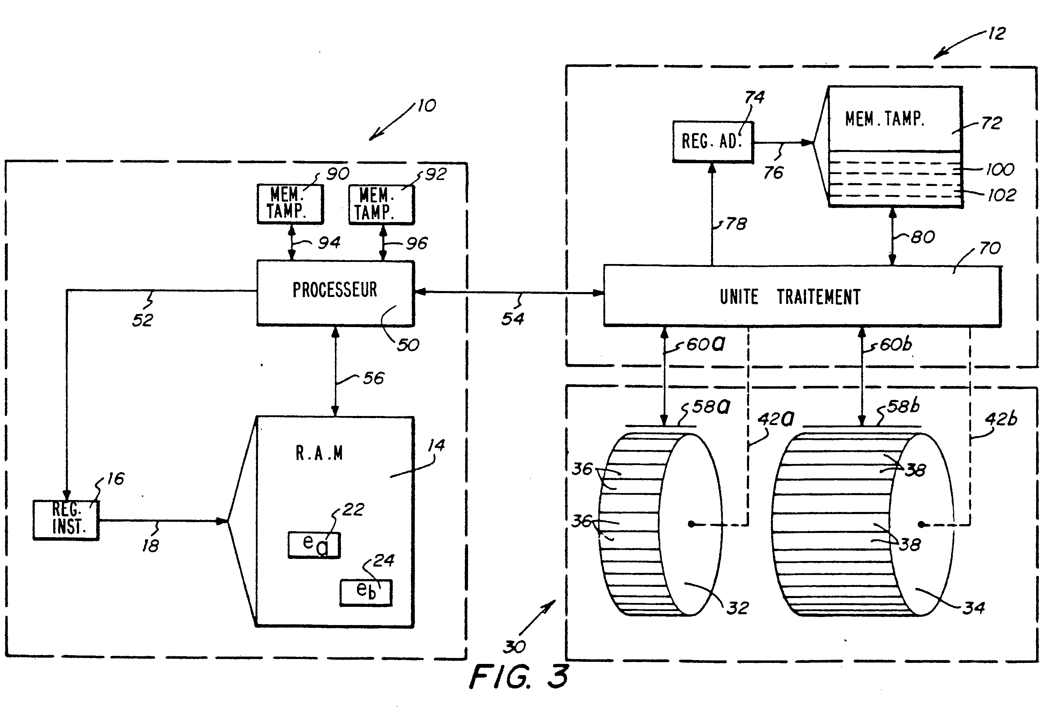

Une autre réalisation de la présente invention est représentée sur la fig. 3, sur laquelle les éléments correspondant à ceux précédemment décrits sont désignés par les mêmes numéros de référence. De même que la fig. 1, la fig. 3 représente des dispositifs d'emmagasinage série 32 et 34 dont chacun possède sa propre fenêtre d'accès dans la mémoire principale 14, ces fenêtres étant respectivement désignées 22 et 24. Le processeur 12 comprend une unité centrale de traitement 70, un dispositif d'emmagasinage 72 et un registre d'adresses de mémoire 74 permettant à l'unité 70 d'adresser le dispositif 72. Le registre 74 applique une adresse, par l'intermédiaire de la ligne de signaux 76, au dispositif d'emmagasinage 72 et reçoit de l'unité 70 des informations d'adresse par l'intermédiaire de la ligne de signaux 78. Le dispositif 72 et l'unité 70 communiquent par l'intermédiaire du bus 80.

Un mode de réalisation particulier de la présente invention, comme le montre la fig. 3, réside dans l'emploi de mémoires-tampon de données destinées à être utilisées avec les dispositifs d'emmagasinage 32 et 34. Ces mémoires-tampon, 90 et 92, sont prévues dans le processeur 10 et communiquent avec l'unité de traitement 50 par l'intermédiaire de bus de données 94 et 96. Les mémoires-tampon 90 et 92 sont respectivement utilisées en conjonction avec les dispositifs d'emmagasinage 32 et 34. Le dispositif d'emmagasinage 72 comporte des zones 100 et 102 qui sont utilisées avec les dispositifs 32 et 34. La mémoire-tampon 90 permet d'emmagasiner un unique élément de la pile, particulièrement un élément de données et peut être disposée dans la mémoire principale 14 ou, comme le montre la fig. 3, constituer un registre séparé de la mémoire principale. La zone 100, située à l'intérieur du dispositif d'emmagasinage 72 du processeur 12, permet d'emmagasiner plusieurs éléments de données provenant du dispositif 32.

Lorsqu'on ajoute des éléments de données à des positions de mémoire du dispositif 32, chacun de ces éléments est transféré depuis la mémoire principale 14, par l'intermédiaire d'une fenêtre d'accès telle que la position de mémoire 22, à la mémoire-tampon 90, puis à la zone 100 que comporte le dispositif d'emmagasinage 72 du processeur 12. Une fois qu'un nombre prédéterminé d'éléments de données se sont accumulés dans la zone 100, ils sont transférés en bloc au dispositif 32, chaque élément de données étant placé dans une position de mémoire distincte 36 du dispositif d'emmagasinage série 32.

En fonctionnement normal, lorsque des éléments de données sont retirés du dispositif 32, ils sont transférés à la zone 100 et, par l'intermédiaire de l'unité de traitement 70, à la mémoire principale 14 et à des positions de mémoire de cette dernière telle que la position 22. Les éléments de données emmagasinés dans la zone 100 sont transférés individuellement à la mémoire-tampon 90 afin d'être emmagasinés dans la position de mémoire 22. Lorsqu'un certain nombre d'éléments de données émanant de la zone 100 se trouve épuisé, un autre groupe d'éléments de données ainsi que les numéros d'index qui leurs sont associés sont transférés du dispositif 32 à la zone 100.

L'emploi de mémoires-tampon qui vient d'être décrit permet d'augmenter la vitesse à laquelle les éléments de données peuvent être transférés au dispositif 32 ou depuis celui-ci et d'obtenir un traitement continu de ces éléments à une vitesse voisine de celle à laquelle les données sont traitées par le processeur 10. L'agencement analogue qui est prévu dans le cas du dispositif d'emmagasinage 34 fonctionne de la même façon que celui qui vient d'être décrit à propos du dispositif 32. Le processeur 12 fonctionne de façon asynchrone par rapport au processeur de données 10 afin que les mémoires-tampon 90 et 92 soient constamment remplies.

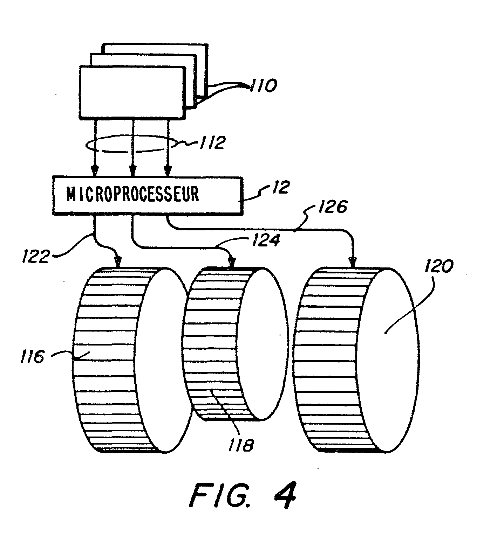

La fig. 4 représente une variante de la présente invention dans laquelle une fonction de multiplexage des données est assurée au moyen du présent dispositif d'emmagasinage série 30. Dans cette variante, des dispositifs d'entrée/sortie 110 accèdent directement aux dispositifs d'emmagasinage série. Les dispositifs d'entrée/sortie 110 transmettent des éléments de données au processeur 12 par l'intermédiaire des lignes de signaux 112. Chaque élément de données comprend un champ d'identification de dispositifs d'emmagasinage série, et un champ de données. Le champ d'identification indique lequel des dispositifs d'emmagasinage série, par exemple, 116, 118 ou 120, doit recevoir l'élément de données. Le processeur 12 assure de nouveau une fonction de commande et applique les données par l'intermédiaire des lignes de signaux 122, 124 et 126, aux dispositifs 116, 118 et 120. La totalité d'un élément de données, ou une partie choisie de celui-ci, peut donc être mise dans un ou plusieurs des dispositifs 116, 118 et 120, dans une même position d'emmagasinage de données. Les données peuvent ainsi être obtenues des dispositifs d'entrée/sortie et utilisées dans différents agencements et séquences en utilisant le dispositif d'emmagasinage série de la présente invention.

Cette dernière permet donc d'augmenter l'espace disponible aux fins de l'emmagasinage dans un processeur de données, sans pour autant rendre plus complexe l'adressage de la mémoire principale, en ajoutant une troisième dimension, ou coordonnée, à la mémoire grâce à l'emploi d'un dispositif d'emmagasinage série. Les dispositifs de ce dernier type qui sont utilisés dans la présente invention permettent l'emmagasinage de données de différentes longueurs, et un nombre quelconque de ces dispositifs peut être employé en fonction de la configuration et de l'architecture du système de traitement de données.

**Revendications**

1. Système de mémoire de données, comportant un premier processeur (50) pouvant générer des instructions d'introduction et de retrait de données, un premier dispositif d'emmagasinage de données à accès sélectif (14) associé audit premier processeur et comportant une pluralité de positions de mémoire (22), un second processeur (12) connecté audit premier processeur et une pluralité de dispositifs secondaires d'emmagasinage de données (32, 34) associées audit second processeur; ledit système étant caractérisé en ce que:

chaque dispositif de ladite pluralité de dispositifs secondaires d'emmagasinage (32, 34) est une mémoire série du type «premier-entré, premier-sorti» ou «dernier-entré, premier-sorti», et est associé respectivement à une position de mémoire dudit premier dispositif d'emmagasinage,

la largeur de données de chacune des positions de mémoire du dispositif secondaire correspond à la largeur de données de la position de mémoire dudit premier dispositif auquel il est respectivement associé,

des moyens de commande (16, 50) sont associés audit premier processeur et audit premier dispositif d'emmagasinage de données qui, en réponse auxdites instructions générées par ledit premier processeur, adressent une des positions de mémoire dudit premier dispositif d'emmagasinage de façon à transférer, par l'intermédiaire dudit premier processeur des données entre ladite position de mémoire et ledit second processeur et permettre à ce dernier d'adresser le dispositif secondaire d'emmagasinage associé, de telle sorte que ledit premier processeur a accès à chacun desdits dispositifs secondaires d'emmagasinage par l'exécution par lesdits moyens de commande d'une instruction commandant l'adressage à une position de mémoire dudit premier dispositif d'emmagasinage, et

ledit second processeur procède, en réponse au décodage des instructions générées par ledit premier processeur, au transfert des données entre la position de mémoire dudit premier moyen d'emmagasinage adressé par lesdits moyens de commande, et le dispositif secondaire d'emmagasinage associé.

2. Système selon la revendication 1, caractérisé en ce que lesdits moyens de commande comprennent des moyens (50) permettant, en réponse à une instruction d'introduction de données, d'engendrer l'adresse de l'une des positions de mémoire (22) dudit premier dispositif d'emmagasinage (14) afin de transférer les données contenues dans ladite position de mémoire adressée du premier dispositif d'emmagasinage au dispositif secondaire d'emmagasinage associé (32) par l'intermédiaire dudit second processeur (12).

3. Système selon la revendication 1, caractérisé en ce que lesdits moyens de commande comprennent des moyens (50) permettant, en réponse à une instruction de retrait de données, d'engendrer l'adresse de l'une desdites positions de mémoire (22) dudit premier dispositif d'emmagasinage (14) afin de transférer des données du dispositif secondaire d'emmagasinage associé (32) à ladite position de mémoire adressée du premier dispositif d'emmagasinage par l'intermédiaire dudit second processeur (12).

4. Système selon l'une des revendications 1, 2 ou 3 caractérisé en ce que les positions de mémoire (22) dudit premier dispositif d'emmagasinage à accès sélectif (14) peuvent contenir des données de largeurs différentes ($E_a$, $E_b$).

5. Système selon l'une quelconque des revendications 1 à 4, caractérisé en ce que les dispositifs secondaires d'emmagasinage (32, 34) sont des mémoires à domaines cylindriques magnétiques.

6. Système selon l'une quelconque des revendications 1 à 4, caractérisé en ce que les dispositifs secondaires d'emmagasinage (32, 34) sont des dispositifs d'emmagasinage à couplage de charge.

7. Système selon l'une quelconque des revendications 1 à 4, caractérisé en ce que les dispositifs secondaires d'emmagasinage (32, 34) sont des mémoires adressables par faisceau électronique.

8. Système selon l'une quelconque des revendications précédentes, caractérisé en ce qu'il comprend en outre:

une mémoire (72) associée aux dispositifs secondaires d'emmagasinage de données (32, 34), servant de mémoire-tampon pour des blocs de données formés de données à transférer entre ledit premier dispositif d'emmagasinage (14) et lesdits dispositifs secondaires d'emmagasinage.

9. Système selon l'une quelconque des revendications précédentes, caractérisé en ce qu'il comprend en outre:

une mémoire (90, 92) associée au premier dispositif d'emmagasinage de données (14), servant de mémoire-tampon pour des données à transférer entre ledit premier dispositif d'emmagasinage et les dispositifs secondaires d'emmagasinage (32, 34).

10. Système selon la revendication 9, caractérisé en ce que ladite mémoire-tampon (90, 92) comporte plusieurs unités de mémoire, chacune des unités étant associée à l'une des positions de mémoire (22) dudit premier dispositif d'emmagasinage (14), pour emmagasiner temporairement les données qui sont transférées d'une desdites positions de mémoire au dispositif secondaire d'emmagasinage associé (32, 34).

**Claims**

1. A data storage system comprising a first processor (50) which can generate instructions for inputting and outputting data, a first random access data storage device (14) associated with said first processor and including a plurality of storage locations (22), a second processor (12) connected to said first processor and a plurality of secondary data storage devices (32, 34) associated with said second processor, said system being characterized in that

each device of said plurality of secondary storage devices (32, 34) is a serial block storage device of the "first in, first out" or "last in, last out" type and is respectively associated with a storage location of said storage device, the data width of each storage location of the secondary device, corresponding to the data width of the storage location of said first storage device with which it is respectively associated control means (16, 50) are associated with said first processor and said first data storage device which, in response to said instructions generated by said first processor, address one of the storage locations of said first storage device in order to transfer data through said first processor, between said storage location and said second processor and allow the latter to address the associated secondary storage device, so that said first processor can access to each of said secondary storage device through the execution, by said control means, of an instruction controlling the addressing to a storage location of said first storage device, and

said second processor transfers, in response to the decoding of the instructions generated by said first processor, data between the storage location of said first storage means addressed by said control means and the associated secondary storage device.

2. A system as set forth in claim 1, characterized in that said control means comprise means (50) which, in response to a data input instruction allow the address of one of storage locations (22) of said first storage device (14) to be generated in order to transfer the data contained in said addressed storage location of the first storage device into associated secondary storage device (32) through said second processor (12).

3. A system as set forth in claim 1, characterized in that said control means comprise means (50) which, in response to a data output instruction allow the address of one of said storage locations (22) of said first storage device (14) to be generated in order to transfer data from associated secondary storage device (32) to said addressed storage location of the first storage device through said second processor (12).

4. A system as set forth in anyone of claims 1 to 3, characterized in that: storage locations (22) of said first random access storage device (14) can contain data of various width (Ea, Eb).

5. A system as set forth in claims 1 to 4, characterized in that said secondary storage device (32, 34) consist of magnetic cylindrical domain memories.

6. A system as set forth in anyone of claims 1 to 4, characterized in that secondary storage devices (32, 34) consist in charge coupled storage devices.

7. A system as set forth in anyone of claims 1 to 4, characterized in that the secondary storage devices (32, 34) are comprised of electron beam addressable memories.

8. A system as set forth in anyone of the above claims, characterized in that it further comprises:

A storage (72) associated with secondary data storage device (32, 34) used as a buffer for data blocks comprised of data to be transferred between said first storage device (14) and said secondary storage devices.

9. A system as set forth in anyone of the above claims, characterized in that it further comprises:

A storage (90, 92) associated with said first data storage device (14) used as a buffer for data to be transferred between said first storage device and secondary storage devices (32, 34).

10. A system as set forth in claim 9, characterized in that said buffer (90, 92) comprises a plurality of storage units, each of said storage units being associated with one of storage locations (22) of said first storage device (14) for provisionally storing the data which are transferred from one of said storage locations to associated secondary storage device (32, 34).

**Patentansprüche**

1. Daten-Speichersystem mit einem ersten Prozessor (50) zur Erzeugung von Befehlen für die Daten-Einspeicherung und die Daten-Auslesung, einer ersten mit dem ersten Prozessor verbundenen und eine Vielfalt von Speicherstellen (22) enthaltenden Daten-Hauptspeicheranlage mit wahlfreiem Zugriff (14), einem zweiten mit dem ersten Prozessor verbundenen Prozessor (12) und einer Vielfalt von zu dem zweiten Prozessor zugeordneten Nebenspeicheranordnungen (32, 34), wobei das Speichersystem dadurch gekennzeichnet ist, dass

jede Anordnung aus der Vielfalt von Nebenspeicheranordnungen (32, 34) eine serienmässige gemäss dem FIFO- oder dem LIFO-Prozess (first-in/first-out; last-in/first-out) betreibende Speicheranordnung aufweist, und zu der jeweils eine Speicherstelle aus der ersten Hauptspeicheranlage zugeordnet ist, wobei die Datenlänge jeder Speicherstelle in der entsprechenden Nebenspeicheranordnung der Datenlänge der ihr zugeordneten Speicherstelle in der ersten verbundenen Hauptspeicheranlage entspricht,

Steuermittel (16, 50) zu dem ersten Prozessor und der ersten Hauptspeicheranlage zugeordnet sind, die im Ansprechen auf die von dem ersten Prozessor erzeugten Befehle eine aus den Speicherstellen in der ersten Daten-Hauptspeicheranlage zur Übertragung von Daten zwischen dieser Speicherstelle und dem zweiten Prozessor über den ersten Prozessor ansteuert und auch dazu ansteuert, dass der letztere die ihm zugeordnete Nebenspeicheranordnung adressieren kann, so dass der erste Prozessor Zugriff zu jeder der Nebenspeicheranordnungen durch Ausführung eines Befehles für die Adressierung zu einer aus den Speicherstellen in der ersten Hauptspeicheranlage durch die Steuermittel hat,

der zweite Prozessor im Ansprechen auf die Dekodierung der von dem ersten Prozessor erzeugten Befehle die Übertragung von Daten zwischen der Speicherstelle in der ersten durch die Steuermittel angesteuerten Hauptspeicheranlage und der der Speicherstelle zugeordneten Nebenspeicheranordnung steuert.

2. Speichersystem nach Anspruch 1, dadurch gekennzeichnet, dass die Steuermittel Mittel (50) aufweisen, die im Ansprechen auf einen Befehl zur Einspeicherung von Daten Erzeugung der einer aus den Speicherstellen (22) in der ersten Hauptspeicheranlage (14) entsprechenden Adresse ermöglicht, so dass die Daten, die in der von der ersten Hauptspeicheranlage adressierten Speicherstelle eingespeichert sind, in die zugeordnete Nebenspeicheranordnung (32) über den zweiten Prozessor (12) übertragen werden.

3. Speichersystem nach Anspruch 1, dadurch gekennzeichnet, dass die Steuermittel Mittel (50) aufweisen, die im Ansprechen auf einen Befehl zur Auslesung von Daten Erzeugung der einer aus den Speicherstellen (22) in der ersten Hauptspeicheranlage (14) entsprechenden Adresse ermöglicht, so dass in der zugeordneten Nebenspeicheranordnung (32) eingespeicherte Daten in die in der ersten Hauptspeicheranlage adressierte Speicherstelle über den zweiten Prozessor (12) übertragen werden.

4. Speichersystem nach einem der Ansprüche 1, 2 oder 3, dadurch gekennzeichnet, dass die Speicherstellen (22) in der ersten Hauptspeicheranlage mit wahlfreiem Zugriff (14) Daten verschiedener Breiten (Ea, Eb) enthalten können.

5. Speichersystem nach einem der Ansprüche 1 bis 4, dadurch gekennzeichnet, dass die Nebenspeicheranordnungen (32, 34) Speicher mit zylindrischen Magnetbereichen sind.

6. Speichersystem nach einem der Ansprüche 1 bis 4, dadurch gekennzeichnet, dass die Nebenspeicheranordnungen (32, 34) Ladungskopplungsspeicher sind.

7. Speichersystem nach einem der Ansprüche 1 bis 4, dadurch gekennzeichnet, dass die Nebenspeicheranordnungen (32, 34) mittels eines Elektronenstrahles adressierbare Speicher sind.

8. Speichersystem nach einem der vorhergehenden Ansprüche, dadurch gekennzeichnet, dass es weiterhin auch aufweist:

einen mit den Nebenspeicheranordnungen (32, 34) verbundenen Speicher (72), der als Pufferspeicher für aus zwischen der ersten Hauptspeicheranlage (14) und den Nebenspeicheranordnungen zu übertragenden Daten zusammengesetzte Datenblöcke dient.

9. Speichersystem nach einem der vorhergehenden Ansprüche, dadurch gekennzeichnet, dass es weiterhin auch aufweist:

einen mit der ersten Hauptspeicheranlage (14) verbundenen Speicher (90, 92), der als Pufferspeicher für zwischen der ersten Hauptspeicheranlage und den Nebenspeicheranordnungen (32, 34) zu übertragende Daten dient.

10. Speichersystem nach Anspruch 9, dadurch gekennzeichnet, dass der Pufferspeicher (90, 92) mehrere Speichereinheiten zur vorübergehenden Aufnahme der aus eine aus den Speicherstellen in die ihr zugeordnete Nebenspeicheranordnung (32, 34) übertragenen Daten aufweist, wobei jede Speichereinheit mit einer aus den Speicherstellen (22) in der ersten Hauptspeicheranlage (14) verbunden ist.

0 020 983

FIG. 1

FIG. 2

FIG. 3

MEM. TAMP. 90
MEM. TAMP. 92
94
96
PROCESSEUR 50
52
54
56
REG. INST. 16
18
R.A.M 14
$e_a$ 22
$e_b$ 24
10
11

REG. AD. 74
MEM. TAMP. 72
76
100
102
78
80
UNITE TRAITEMENT 70
60a
60b
58a
42a
58b
42b
36
36
32
38
38
34
30
12

0 020 983

FIG. 4